# EUROPÄISCHE PATENTSCHRIFT

(11) **EP 3 493 933 B1**
(45) Veröffentlichungstag und Bekanntmachung des Hinweises auf die Patenterteilung: **14.09.2022**
(21) Anmeldenummer: 17783799.4
(22) Anmeldetag: 04.10.2017
(51) Int. Cl.: B29C 64/386, B22F 10/80, B22F 10/20, B22F 10/47, B29C 64/40, B33Y 80/00, B33Y 50/00

(54) **3D-DRUCKVERFAHREN**
3D PRINTING METHOD
PROCÉDÉ D'IMPRESSION EN 3D

(30) Priorität: 13.10.2016 EP 16193612
(43) Veröffentlichungstag der Anmeldung: 12.06.2019
(73) Patentinhaber: Flender GmbH, 46395 Bocholt (DE)
(72) Erfinder: DINTER, Ralf Martin, 45888 Gelsenkirchen (DE)
(74) Vertreter: Michalski Hüttermann & Partner Patentanwälte mbB
(86) Internationale Anmeldenummer: PCT/EP2017/075226
(87) Internationale Veröffentlichungsnummer: WO 2018/069118

(56) Entgegenhaltungen:
- EP-A1- 2 910 362
- WO-A1-2012/131481
- DE-A1-102007 033 434
- DE-A1-102013 014 783
- DE-A1-102015 011 110
- DE-B3-102007 048 385

## Beschreibung

Die vorliegende Erfindung betrifft ein 3D-Druckverfahren zum schichtweisen Aufbau von Bauteilen basierend auf einem CAD-Datensatz und unter Verwendung einer eine Arbeitskammer aufweisenden 3D-Druckmaschine.

3D-Druckverfahren der eingangs genannten Art sind im Stand der Technik in unterschiedlichsten Ausgestaltungen bekannt. Mit ihnen ist es möglich, dreidimensionale Werkstücke basierend auf einem Konstruktionsdaten aufweisenden CAD-Datensatz aus unterschiedlichsten Werkstoffen durch physikalische oder chemische Härtungs- oder Schmelzprozesse schichtweise aufzubauen, wobei als Datenformat das STL-Format am geläufigsten ist. Zu den 3D-Druckverfahren zählen unter anderem das selektive Laserschmelzen und das Elektronenstrahlschmelzen insbesondere zur Verarbeitung von metallischen Werkstoffen, das selektive Lasersintern für Polymere, Keramik und Metalle, das Polyjet-Modeling und das Fused-Deposition-Modeling zur Verarbeitung von Kunstharzen und Kunststoffen sowie die Stereolithographie und das Digital Light Processing, bei denen flüssige Kunstharze eingesetzt werden.

Während die 3D-Druckverfahren anfangs in erster Linie im Prototypen- und Modellbau eingesetzt wurden, nehmen sie zunehmend Einzug auch in die Serienproduktion. Ein wesentlicher Vorteil besteht unter anderem darin, dass Werkstücke mit sehr komplexen Formen produziert werden können, die mit alternativen Fertigungsverfahren nur schwer oder gar nicht herstellbar sind. Darüber hinaus sind die 3D-Druckverfahren energetisch meist günstig und benötigen nur wenig Material.

Allen bekannten 3D-Druckverfahren ist gemein, dass die Werkstücke innerhalb einer Arbeitskammer mit meist rechteckiger Grundfläche aufgebaut werden. Dabei bestimmen Grundfläche und Höhe der Arbeitskammer die maximalen Werkstückabmessungen, die innerhalb der entsprechenden 3D-Druckmaschine gefertigt werden können. Hat ein zu fertigendes Bauteil relativ kleine Abmessungen, ist es in der Serienfertigung auch bekannt, mehrere identische Bauteile nebeneinander auf der Grundfläche der Arbeitskammer schichtweise zu generieren. In diesem Fall entscheidet dann also die Größe der Grundfläche der Arbeitskammer über die Anzahl der Werkstücke, die zeitgleich hergestellt werden können.

Aus DE 10 2007 033434 A1 ist ein Verfahren zum additiven Fertigen von Bauteilen bekannt, die mit Hilfsstrukturen beispielsweise über Stege verbunden sind. Die Hilfsstrukturen bilden einen Rahmen und die Bauteile sind an Anbindungspunkten herausbrechbar.

DE 10 2013 014783 A1 offenbart die Verwendung von Stützelementen, die in Aufbaurichtung eines 3D-Drucks zwischen herzustellenden Bauteilen anzuordnen sind, wobei die Bauteile übereinander angeordnet sind.

WO 2012/131481 A1 offenbart übereinander angeordnete oder angeschrägt zueinander verlaufende durch 3D-Druck herstellbare Bauteile.

DE 10 2007 048385 B3 offenbart in einer Lage nebeneinander angeordnete durch 3D-Druck herstellbare Bauteile, die mit Hilfe von Greiferbacken entnommen werden können, sowie einander übergreifende Bauteile.

Ausgehend von diesem Stand der Technik ist es eine Aufgabe der vorliegenden Erfindung, ein Verfahren der eingangs genannten Art bereitzustellen, mit dem insbesondere die Fertigung einer Vielzahl von identisch oder unterschiedlich ausgebildeten Bauteilen beschleunigt werden kann.

Zur Lösung dieser Aufgabe schafft die vorliegende Erfindung ein 3D-Druckverfahren mit den Merkmalen des Anspruchs 1.

Das 3D-Druckverfahren der eingangs genannten Art weist die Schritte auf:
a) Erstellen eines einzelnen CAD-Datensatzes unter Berücksichtigung der Abmessungen der Arbeitskammer und basierend auf Konstruktionsdaten mehrerer zu fertigender Bauteile, der die Form und die Lage der Bauteile im dreidimensionalen Raum sowie die Form und die Lage von wenigstens einige der Bauteile miteinander verbindenden Stützstrukturen definiert, wobei die Lage zumindest einiger Bauteile derart gewählt ist, dass diese in Fertigungsrichtung übereinander und ineinander verschachtelt angeordnet sind;
b) Schichtweises Aufbauen der Bauteile und der Stützstrukturen aus einem Werkstoff unter Verwendung der 3D-Druck-Maschine und des in Schritt a) erstellten CAD-Datensatzes in einem einzelnen Arbeitsgang und
c) Trennen der Bauteile von den Stützstrukturen.

Die der Erfindung zugrunde liegende Idee besteht darin, die Größe der vorhandenen Arbeitskammer einer 3D-Druckmaschine optimal auszunutzen. Diese optimale Ausnutzung wird erfindungsgemäß dadurch erzielt, dass in einen einzelnen CAD-Datensatz die Konstruktionsdaten mehrerer zu fertigender Bauteile aufgenommen und virtuell derart angeordnet werden, dass zumindest einige der Bauteile in Fertigungsrichtung übereinander und ineinander verschachtelt gefertigt werden. Entsprechend können in einem einzelnen Arbeitsgang in den meisten Fällen mehr Bauteile verglichen mit demjenigen Fall generiert werden, in dem zu fertigende Bauteile ausschließlich nebeneinander aufgebaut werden. Auf diese Weise kann die Produktionszeit von Bauteilen unter Einsatz des erfindungsgemäßen 3D-Druckverfahrens in vielen Fällen reduziert werden. Um die Fertigung mehrerer übereinander angeordneter und ineinander verschachtelter Bauteile zu ermöglichen, werden im CAD-Datensatz neben den zu fertigenden Bauteilen auch wenigstens einige der Bauteile miteinander verbindende Stützstrukturen definiert. Solche Stützstrukturen werden im Stand der Technik bislang nur zur Fertigung von Hinterschneidungen oder ähnlichen Strukturen eines einzelnen Bauteils eingesetzt.

Bevorzugt werden die Stützstrukturen in Schritt a) als stegartig und/oder wabenartig ausgebildete Stützstrukturen definiert, da solche Stützstrukturen die erforderliche Stabilität aufweisen und sich im Anschluss an die Fertigung verhältnismäßig einfach von den Bauteilen trennen lassen.

Erfindungsgemäß sind die zu fertigenden Bauteile Einzelteile eines Bausatzes zum Herstellen einer einzelnen Vorrichtung, wobei sich die Außenabmessungen zumindest einiger der zeitgleich zu fertigenden Bauteile voneinander unterscheiden. Das Zusammenfassen konstruktionstechnischer Daten einer Vielzahl von Einzelteilen eines Bausatzes in einem gemeinsamen CAD-Datensatz hat den Vorteil, dass die Einzelteile nicht einzeln nacheinander hergestellt und auch nicht in großer Anzahl bevorratet werden müssen. Vielmehr können diese gemeinsam innerhalb kurzer Zeit generiert werden, sobald beispielsweise der entsprechende Bausatz von einem Kunden bestellt wird. Entsprechend ist eine schnelle Verfügbarkeit eines solchen Bausatzes bei gleichzeitiger Entlastung der Lagerhaltung gewährleistet, wodurch erhebliche Kosten eingespart werden können.

Erfindungsgemäß handelt es sich bei der Vorrichtung um ein Getriebe. In diesem Fall können beispielsweise Gehäuseteile, Planetenträger sowie die einzelnen verzahnten Komponenten die Einzelteile des Bausatzes zur Herstellung des Getriebes bilden.

Die Einzelteile machen zumindest 50%, bevorzugt zumindest 70%, besser noch zumindest 90% der Gesamtanzahl der Einzelteile des Bausatzes aus, wobei die Gesamtanzahl vorliegend keine Standard- bzw. Zukaufteile einschließt, beispielsweise in Form von Verbindungsmitteln wie beispielsweise Schrauben und Stifte, von Lagerungen oder dergleichen.

In Schritt b) wird ein metallischer Werkstoff verwendet, aus dem sowohl die Bauteile als auch die Stützstrukturen aufgebaut werden.

Gemäß einer Ausgestaltung der vorliegenden Erfindung werden die Bauteile einer mechanischen Nachbearbeitung und/oder einer thermischen Nachbehandlung unterzogen, sollten Bauteilgefüge, Bauteilabmessungen oder dergleichen nicht den Anforderungen entsprechen.

Weitere Merkmale und Vorteile der vorliegenden Erfindung werden anhand der nachfolgenden Beschreibung eines Ausführungsbeispiels eines erfindungsgemäßen 3D-Druckverfahrens unter Bezugnahme auf die beiliegende Zeichnung deutlich. Darin ist
- FIG 1: eine schematische Schnittansicht eines zweistufigen Planetengetriebes und
- FIG 2: eine schematische Schnittansicht, die Einzelteile des in FIG 1 dargestellten Getriebes im schichtweise hergestellten Zustand am Ende eines 3D-Druckverfahrens gemäß einer Ausführungsform der vorliegenden Erfindung zeigt.

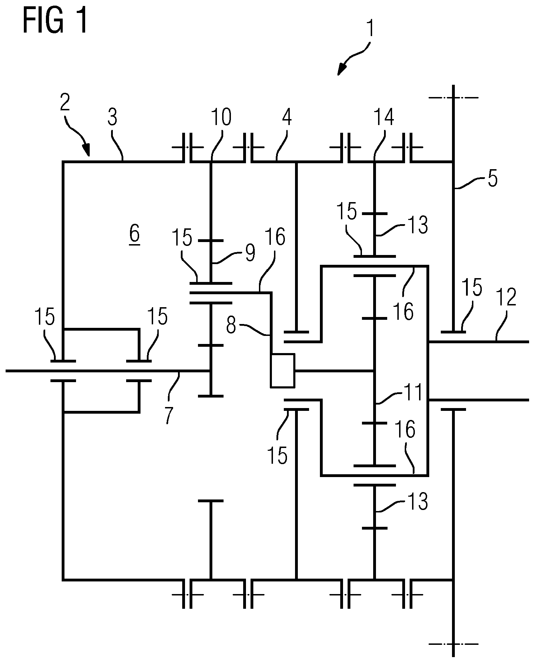

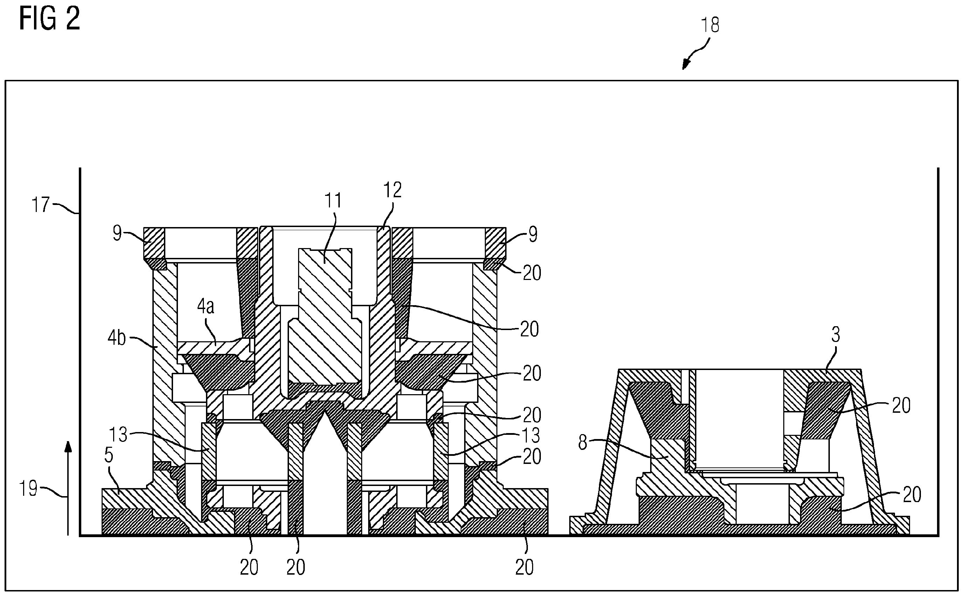

Figur 1 zeigt ein zweistufiges Planetengetriebe 1, dessen Einzelteile zum Großteil unter Verwendung eines 3D-Druckverfahrens gemäß einer Ausführungsform der vorliegenden Erfindung zeitgleich hergestellt werden, wie es nachfolgend unter Bezugnahme auf Figur 2 noch näher erläutert wird. In Figur 1 ist links die Antriebsseite und rechts die Abtriebsseite dargestellt.

Das Planetengetriebe 1 umfasst ein Gehäuse 2 mit einer Gehäuseglocke 3, einem ersten Gehäuseflansch 4 und einem zweiten Gehäuseflansch 5, die gemeinsam einen Aufnahmeraum 6 für die Getriebeteile definieren. Weitere Hauptkomponenten des Planetengetriebes 1 bilden eine Vorstufensonnenradwelle 7, ein Vorstufenplanetenradträger 8, drei Vorstufenplanetenräder 9, ein Vorstufenhohlrad 10, eine Hauptstufensonnenradwelle 11, ein Hauptstufenplanetenradträger 12, vier Hauptstufenplanetenräder 13 und ein Hauptstufenhohlrad 14.

Die Gehäuseglocke 3 und der erste Gehäuseflansch 4 nehmen zwischen sich das Vorstufenhohlrad 10 drehfest auf, und der erste Gehäuseflansch 4 und der zweite Gehäuseflansch 5 nehmen zwischen sich das Hauptstufenhohlrad 14 drehfest auf. Die Vorstufensonnenradwelle ist über geeignete Lager 15 an der Gehäuseglocke gelagert. Ebenso ist der Hauptstufenplanetenradträger 12 mittels geeigneter Lager 15 an dem ersten Gehäuseflansch 4 und dem zweiten Gehäuseflansch 5 drehbar gehalten. An der Hauptstufensonnenradwelle 11 ist drehfest der Vorstufenplanetenradträger 8 über eine geeignete Welle-Nabe-Verbindung montiert. Der Vorstufenplanetenradträger 8 umfasst zumindest drei Zapfen 16, an denen die Vorstufenplanetenräder 9 über geeignete Lager 15 gehalten sind. Ebenso sind an Zapfen 16 des Hauptstufenplanetenradträgers 12 mittels geeigneter Lager 15 die Hauptstufenplanetenräder 13 befestigt. Die Vorstufensonnenradwelle 7 ist mit den Vorstufenplanetenrädern 9 in Eingriff, die wiederum mit dem Vorstufenhohlrad 10 kämmen. Ebenso ist die Hauptstufensonnenradwelle 11 mit den Hauptstufenplanetenrädern 13 in Eingriff, die wiederum mit dem Hauptstufenhohlrad 14 kämmen. Entsprechend führt eine Drehung der Vorstufensonnenradwelle 7 zu einer gemeinsamen Drehung geringerer Drehzahl des Vorstufenplanetenradträgers 8 und der Hauptstufensonnenradwelle 11, und eine Drehung der Hauptstufensonnenradwelle 11 wiederum zu einer Drehung geringerer Drehzahl des Hauptstufenplanetenradträgers 13.

Planetengetriebe der zuvor beschrieben Art sind an sich bekannt, weshalb der spezifische Aufbau des Planetengetriebes 1 nicht als einschränkend anzusehen ist. Vielmehr ist das Planetengetriebe 1 als bevorzugtes Beispiel für jedwede Vorrichtung zu verstehen, die aus einer Vielzahl von Einzelteilen hergestellt ist.

Unter Bezugnahme auf Figur 2 wird nachfolgend die Fertigung einer Vielzahl der Einzelkomponenten des in Figur 1 dargestellten Getriebes beschrieben, und zwar der Gehäuseglocke 3, des ersten Gehäuseflansches 4, des zweiten Gehäuseflansches 5, des Vorstufenplanetenträgers 8, der Vorstufenplanetenräder 9, des Vorstufenhohlrads 10, der Hauptstufensonnenradwelle 11, des Hauptstufenplanetenradträgers 12, der Hauptstufenplanetenräder 13 und des Hauptstufenhohlrads 14.

In einem ersten Schritt wird basierend auf Konstruktionsdaten sämtlicher der zuvor genannten Einzelkomponenten ein einzelner CAD-Datensatz erstellt, der neben der Form der Einzelkomponenten auch deren Lage zueinander im dreidimensionalen Raum unter Berücksichtigung der Abmessungen einer Arbeitskammer 17 einer 3D-Druckmaschine 18 definiert, die zur Herstellung der Einzelkomponenten verwendet werden soll. Dabei werden die Einzelbauteile, wie es in Figur 2 gezeigt ist, zumindest teilweise ineinander verschachtelt und in Fertigungsrichtung 19 übereinander angeordnet. Beispielsweise sind gemäß Figur 2 der in Figur 1 dargestellte zweite Gehäuseflansch 5, das Hauptstufenhohlrad 14, der erste Gehäuseflansch 4, das Vorstufenhohlrad 10 und die Vorstufenplanetenräder 9 der Reihe nach übereinander angeordnet, wobei das Hauptstufenhohlrad 14, der erste Gehäuseflansch 4 und das Vorstufenhohlrad 10 in den Bauteilen 4a und 4b zusammengefasst sind, während der Hauptstufenplanetenradträger 12, die Hauptstufenplanetenräder 13 und die Hauptstufensonnenradwelle 11 innerhalb dieser Komponenten und ineinander verschachtelt positioniert sind. Neben dieser Anordnung ist die Gehäuseglocke 3 vorgesehen, innerhalb der wiederum der Vorstufenplanetenradträger 8 aufgenommen ist. Ferner definiert der CAD-Datensatz die Form und die Lage von die Bauteile miteinander verbindenden Stützstrukturen 20, die insbesondere steg- und/oder wabenförmig ausgebildet sein können. Die Erstellung des CAD-Datensatzes, der beispielsweise im STL-Format bereitgestellt werden kann, erfolgt unter Verwendung eines entsprechenden Computerprogramms zumindest teilautomatisiert. So können beispielsweise die Anordnung der Einzelteile und/oder die Berechnung und Lage der Stützstrukturen 20 automatisch oder unterstützt durch einen Benutzer erfolgen.

Im vorliegenden Fall fassen, wie bereits dargelegt, die Bauteile 4a und 4b das Hauptstufenhohlrad 14, den ersten Gehäuseflansch 4 und das Vorstufenhohlrad 10 zusammen. Bei der Montage wird dann das Bauteil 4a auf das Bauteil 4b aufgeschoben und aufgeschrumpft. Es sollte allerdings klar sein, dass das Hauptstufenhohlrad 14, der erste Gehäuseflansch 4 und das Vorstufenhohlrad 10 grundsätzlich auch jeweils als Einzelteile gefertigt werden können. In diesem Fall müssten diese dann durch entsprechende Stützstrukturen voneinander getrennt werden.

In einem weiteren Schritt werden dann die Bauteile und die zugehörigen Stützstrukturen 20 aus einem Werkstoff unter Verwendung der 3D-Druck-Maschine 18 und des zuvor erstellten CAD-Datensatzes in einem einzelnen Arbeitsgang schichtweise aufgebaut, bis die in Figur 2 dargestellte Anordnung hergestellt ist. Als Werkstoff können vorliegend in Abhängigkeit von dem verwendeten 3D-Druckverfahren insbesondere pulverförmige oder drahtförmige Metalle bzw. Metalllegierungen zum Einsatz kommen.

Anschließend werden die Bauteile von den Stützstrukturen 20 getrennt und, sollte dies erforderlich sein, einer mechanischen Nachbearbeitung und/oder einer thermischen Nachbehandlung unterzogen.

Es sollte klar sein, dass alternativ auch alle Hauptkomponenten des Planetengetriebes 1, vorliegend also auch die Vorstufensonnenradwelle 7, in einem einzelnen Arbeitsgang hergestellt werden können, wenn dies die Abmessungen der Arbeitskammer 17 zulassen. Alternativ können auch weniger als die genannten Einzelkomponenten des Planetengetriebes 1 in einem einzelnen Arbeitsgang hergestellt werden. So kann es beispielsweise vorkommen, dass das 3D-Druckverfahren zur Fertigung bestimmter Bauteile aufgrund äußerer Anforderungen ungeeignet ist, weshalb solche Bauteile mit anderen Fertigungsverfahren hergestellt werden. Auch ist natürlich möglich, die Einzelteile einer Vorrichtung in mehrere CAD-Datensätze aufzuteilen, wenn dies aufgrund zu kleiner Abmessungen der Arbeitskammer 17 erforderlich ist. Die erfindungsgemäß hergestellten Einzelteile machen zumindest 50%, bevorzugt zumindest 70%, besser noch zumindest 90% der Gesamtanzahl der Einzelteile eines Bausatzes aus.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung wie durch die Ansprüche definiert, zu verlassen.

## Patentansprüche

1. 3D-Druckverfahren zum schichtweisen Aufbau von Bauteilen (3, 4, 5, 8, 9, 10, 11, 12, 13, 14) basierend auf einem CAD-Datensatz und unter Verwendung einer eine Arbeitskammer (17) aufweisenden 3D-Druckmaschine (18), wobei das Verfahren die Schritte aufweist:
a) Erstellen eines einzelnen CAD-Datensatzes unter Berücksichtigung der Abmessungen der Arbeitskammer (17) und basierend auf Konstruktionsdaten mehrerer zu fertigender Bauteile (3, 4, 5, 8, 9, 10, 11, 12, 13, 14), der die Form und die Lage der Bauteile (3, 4, 5, 8, 9, 10, 11, 12, 13, 14) im dreidimensionalen Raum sowie die Form und die Lage von wenigstens einige der Bauteile (3, 4, 5, 8, 9, 10, 11, 12, 13, 14) miteinander verbindenden Stützstrukturen (20) definiert;
b) Schichtweises Aufbauen der Bauteile (3, 4, 5, 8, 9, 10, 11, 12, 13, 14) und der Stützstrukturen (20) aus einem Werkstoff unter Verwendung der 3D-Druck-Maschine (18) und des in Schritt a) erstellten CAD-Datensatzes in einem einzelnen Arbeitsgang und
c) Trennen der Bauteile (3, 4, 5, 8, 9, 10, 11, 12, 13, 14) von den Stützstrukturen (20),
wobei die zu fertigenden Bauteile (3, 4, 5, 8, 9, 10, 11, 12, 13, 14) Einzelteile eines Bausatzes zum Herstellen einer einzelnen Vorrichtung sind,
wobei die Einzelteile des Bausatzes verzahnte Komponenten umfassen, es sich bei der Vorrichtung um ein Getriebe (1) handelt,
die Einzelteile zumindest 50% der Gesamtzahl der Einzelteile des Bausatzes ausmachen,
in Schritt b) ein metallischer Werkstoff verwendet wird und die Lage zumindest einiger Bauteile (3, 4, 5, 8, 9, 10, 11, 12, 13, 14) derart gewählt ist, dass diese in Fertigungsrichtung übereinander und ineinander verschachtelt angeordnet sind.

2. 3D-Druckverfahren nach Anspruch 1, **dadurch gekennzeichnet, dass** die Stützstrukturen (20) in Schritt a) als stegartig und/oder wabenartig ausgebildete Stützstrukturen definiert werden.

3. 3D-Druckverfahren nach einem der vorhergehenden Ansprüche, **dadurch gekennzeichnet, dass** die Einzelteile zumindest 70%, besser noch zumindest 90% der Gesamtanzahl der Einzelteile des Bausatzes ausmachen.

4. 3D-Druckverfahren nach einem der vorhergehenden Ansprüche, **dadurch gekennzeichnet, dass** die Bauteile (3, 4, 5, 8, 9, 10, 11, 12, 13, 14) einer mechanischen Nachbearbeitung und/oder einer thermischen Nachbehandlung unterzogen werden.

## Claims

1. 3D printing method for building up components (3, 4, 5, 8, 9, 10, 11, 12, 13, 14) layer by layer on the basis of a CAD dataset and by using a 3D printing machine (18) having a working chamber (17), wherein the method has the steps:
a) creating an individual CAD dataset whilst taking into account the dimensions of the working chamber (17) and on the basis of design data of a plurality of components (3, 4, 5, 8, 9, 10, 11, 12, 13, 14) to be produced, which defines the shape and the position of the components (3, 4, 5, 8, 9, 10, 11, 12, 13, 14) in three-dimensional space and the shape and the position of at least some of the supporting structures (20) connecting the components (3, 4, 5, 8, 9, 10, 11, 12, 13, 14) to one another;
b) building up the components (3, 4, 5, 8, 9, 10, 11, 12, 13, 14) and the supporting structures (20) layer by layer from a material by using the 3D printing machine (18) and the CAD dataset created in step a) in a single operation, and
c) separating the components (3, 4, 5, 8, 9, 10, 11, 12, 13, 14) from the supporting structures (20),
wherein the components (3, 4, 5, 8, 9, 10, 11, 12, 13, 14) to be produced are individual parts of an assembly for manufacturing a single device,
wherein the individual parts of the assembly comprise toothed components, the device is a gear mechanism (1) and the individual parts make up at least 50% of the total number of individual parts of the assembly,
in step b), a metallic material is used and the position of at least some components (3, 4, 5, 8, 9, 10, 11, 12, 13, 14) is chosen in such a way that these are arranged above one another and nested in one another in the production direction.

2. 3D printing method according to Claim 1, **characterized in that** the supporting structures (20) in step a) are defined as web-like and/or honeycomb-like supporting structures.

3. 3D printing method according to one of the preceding claims, **characterized in that** the individual parts make up at least 70%, better still at least 90%, of the total number of individual parts of the assembly.

4. 3D printing method according to one of the preceding claims, **characterized in that** the components (3, 4, 5, 8, 9, 10, 11, 12, 13, 14) are subjected to mechanical reworking and/or thermal post-treatment.

## Revendications

1. Procédé d'impression 3D destiné la construction par couches de composants (3, 4, 5, 8, 9, 10, 11, 12, 13, 14) sur la base d'un ensemble de données CAO et à l'aide d'une machine d'impression 3D (18) comportant une chambre de travail (17), le procédé comprenant les étapes suivantes :
a) créer un ensemble de données CAO unique avec prise en compte des dimensions de la chambre de travail (17) et sur la base de données de construction d'une pluralité de composants à fabriquer (3, 4, 5, 8, 9, 10, 11, 12, 13, 14) qui définit la forme et la position des composants (3, 4, 5, 8, 9, 10, 11, 12, 13, 14) dans l'espace tridimensionnel et la forme et la position de de structures de support (20) reliant au moins certains des composants (3, 4, 5, 8, 9, 10, 11, 12, 13, 14) entre eux ;
b) construire par couches les composants (3, 4, 5, 8, 9, 10, 11, 12, 13, 14) et les structures de support (20) à partir d'une matière à l'aide de la machine d'impression 3D (18) et de l'ensemble de données CAO, créé à l'étape a), en une seule opération et
c) séparer les composants (3, 4, 5, 8, 9, 10, 11, 12, 13, 14) des structures de support (20),
les composants à fabriquer (3, 4, 5, 8, 9, 10, 11, 12, 13, 14) étant des pièces individuelles d'un kit destiné à fabriquer un dispositif individuel,
les pièces individuelles du kit comprenant des composants à denture, le dispositif étant une transmission (1), les pièces individuelles constituant au moins 50 % du nombre total de pièces individuelles du kit,
une matière métallique étant utilisée à l'étape b) et la position d'au moins certains composants (3, 4, 5, 8, 9, 10, 11, 12, 13, 14) étant choisie de manière à ce qu'ils soient disposés en étant imbriqués les uns au-dessus l'autre et les uns dans les autres dans le sens de fabrication.

2. Procédé d'impression 3D selon la revendication 1, **caractérisé en ce que** les structures de support (20) à l'étape a) sont définies comme des structures de support en forme d'entretoises et/ou de nids d'abeille.

3. Procédé d'impression 3D selon l'une des revendications précédentes, **caractérisé en ce que** les pièces individuelles représentent au moins 70 %, mieux encore au moins 90 %, du nombre total de pièces individuelle du kit.

4. Procédé d'impression 3D selon l'une des revendications précédentes, **caractérisé en ce que** les composants (3, 4, 5, 8, 9, 10, 11, 12, 13, 14) sont soumis à un post-traitement mécanique et/ou un post-traitement thermique.
